# EUROPEAN PATENT APPLICATION

(11) **EP 2 827 413 A1**
(43) Date of publication of application: **21.01.2015**
(21) Application number: 13760844.4
(22) Date of filing: 12.03.2013
(51) Int. Cl.: H01M 4/485, H01M 2/10, H01M 4/131, H01M 10/0525, H01M 10/0568

(54) **NON-AQUEOUS ELECTROLYTE SECONDARY BATTERY AND BATTERY PACK**

(30) Priority: 15.03.2012 JP 2012059124
(71) Applicant: Kabushiki Kaisha Toshiba, Minato-ku Tokyo 105-8001 (JP)
(72) Inventor: NAKAGAWA, Hiroshi, Tokyo 105-8001 (JP); SARUWATARI, Hidesato, Tokyo 105-8001 (JP); SHIKOTA, Masataka, Tokyo 105-8001 (JP); NEWTON, Kazuko, Tokyo 105-8001 (JP); KURIYAMA, Kazuya, Tokyo 105-8001 (JP)
(74) Representative: Hoffmann Eitle
(86) International application number: PCT/JP2013/056859
(87) International publication number: WO 2013/137272

(57) **Abstract**

According to an embodiment, a nonaqueous electrolyte secondary battery including a positive electrode, a negative electrode containing a lithium titanium composite oxide having a spinel structure as a negative electrode active material, and a nonaqueous electrolyte, wherein the lithium titanium composite oxide that is the negative electrode active material has an average particle size based on a mass basis of 0.3 µm or more but 0.9 µm or less, and a lithium carbonate content rate of the negative electrode is 0.1% by mass or less per mass of the negative electrode active material, is provided.

## Description

### Technical Field

The embodiment of the present invention relates to a nonaqueous electrolyte secondary battery and a battery pack.

### Background Art

A lithium-ion secondary battery has a high energy density, thus is expected to be used in not only small consumer appliances such as a cell phone and a laptop computer, but also as a power source for an electric vehicle (EV) or hybrid electric vehicle (HEV). As power sources for vehicles are frequently used in cold environments at lower temperatures, as compared to consumer appliances, better low-temperature characteristics are required.

Of such batteries, a lithium-ion secondary battery using a lithium titanium composite oxide in a negative electrode does not cause metal lithium deposition even in low temperature conditions, as compared to those using a carbon material such as graphite in a negative electrode, thus is expected as a promising material. However, a lithium titanium composite oxide has a lithium ion conductivity that is about two digits lower than a lithium cobalt composite oxide used in a positive electrode, and in particular, in high-rate charge-discharge at low temperature, there is a problem that the charge and discharge capacity is reduced since lithium ion diffusion in the lithium titanium composite oxide of the negative electrode is slow. Therefore, further improvement is desired for charge and discharge characteristics at low temperature.

For example, when the particle size of the lithium titanium composite oxide is made smaller, the lithium ion diffusion length of the particles is shortened, and the charge and discharge characteristics are improved. However, when very fine particles having an average particle size of 0.9 µm or less are used, there is a problem that aggregation of the lithium titanium composite oxide occurs in the slurry preparation stage for an electrode preparation, whereby the charge and discharge characteristics are reduced.

### Citation List

### Patent Literatures

Patent Literature 1: Japanese Patent No. 4153192
Patent Literature 2: Japanese Patent No. 3769291

### Summary of Invention

### Technical Problem

A problem to be solved by the present invention is to provide a nonaqueous electrolyte secondary battery exhibiting excellent charge and discharge characteristics at low temperature and a battery pack comprising the same.

### Solution to Problem

According to an embodiment, a nonaqueous electrolyte secondary battery including: a positive electrode; a negative electrode containing a lithium titanium composite oxide having a spinel structure as a negative electrode active material; and a nonaqueous electrolyte, wherein the lithium titanium composite oxide that is the negative electrode active material has an average particle size based on a mass basis of 0.3 µm or more but 0.9 µm or less, and a lithium carbonate content rate of the negative electrode is 0.1% by mass or less per mass of the negative electrode active material, is provided.

### Brief Description of Drawings

FIG. 1 is a cross-sectional view of a nonaqueous electrolyte secondary battery according to a first embodiment.
FIG. 2 is a cross-sectional view enlarging a portion A of the nonaqueous electrolyte secondary battery in FIG. 1.
FIG. 3 is an exploded perspective view of a battery pack according to a second embodiment.
FIG. 4 is a circuit diagram showing a connection status of the battery pack according to a second embodiment.
FIG. 5 is a graph showing a particle size distribution of a negative electrode active material used in a negative electrode of the nonaqueous electrolyte secondary battery produced in Example 1.
FIG. 6 is a graph showing a particle size distribution of a negative electrode active material used in a negative electrode of the nonaqueous electrolyte secondary battery produced in Comparative Example 1.

### Description of Embodiments

Hereinbelow, embodiments will be described with reference to the drawings. In the following description, the constituents exhibiting the same or similar function are denoted by the same reference signs throughout all drawings to omit the overlapping description. Also, each drawing is a schematic view to facilitate the description and understanding of the embodiments. The shape, size, and ratio thereof are different from those of an actual device. However, they can be appropriately designed and modified by taking into consideration the following description and known techniques.

### (First embodiment)

A nonaqueous electrolyte secondary battery according to a first embodiment includes: a positive electrode; a negative electrode containing a lithium titanium composite oxide having a spinel structure as a negative electrode active material; and a nonaqueous electrolyte. The lithium titanium composite oxide has an average particle size R based on a mass basis of 0.3 µm or more but 0.9 µm or less. A lithium carbonate content rate of the negative electrode is 0.1% by mass or less per mass of the negative electrode active material.

Subsequently, the nonaqueous electrolyte secondary battery according to the first embodiment will be more specifically described with reference to the drawings.

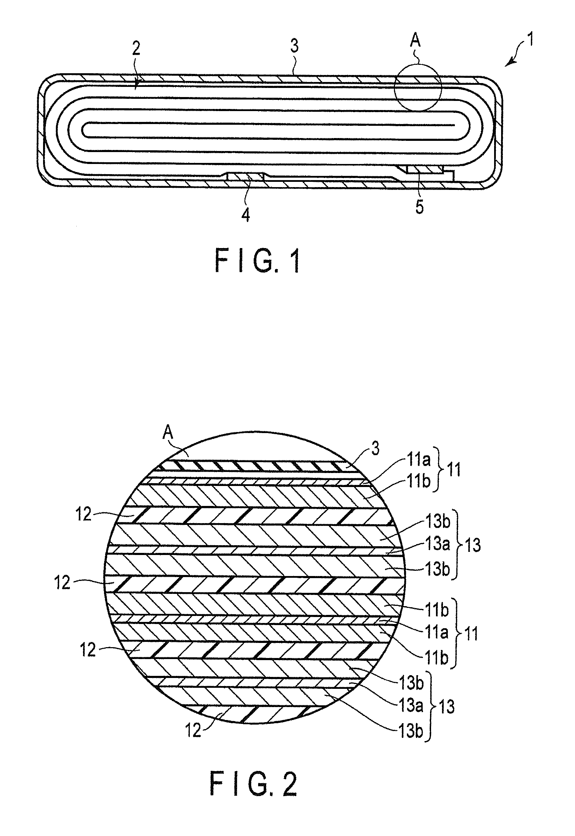

FIG. 1 is a schematic cross-sectional view of a flat type nonaqueous electrolyte secondary battery. FIG. 2 is an enlarged cross-sectional view of a portion A of FIG. 1.

A flat type coiled electrode group 2 is housed in a bag-shaped exterior member 3 comprised of a laminate film in which a metal layer is sandwiched between two resin layers. The flat type coiled electrode group 2 is formed by spirally coiling a laminate obtained by laminating in the order of a negative electrode 11, a separator 12, a positive electrode 13 and a separator 12, as shown in FIG. 2, and press-molding the coiled laminate.

The negative electrode 11 contains a negative electrode current collector 11a and a negative electrode material layer 11b. The negative electrode 11 of an outermost layer has a configuration in which the negative electrode material layer 11b is formed on one side of the internal surface side of the negative electrode current collector 11a, as shown in FIG. 2. In other negative electrodes 11, the negative electrode material layer 11b is formed on both sides of the negative electrode current collector 11a.

As the negative electrode current collector 11a, a material which is electrochemically stable at the lithium absorption and release potential of the negative electrode active material contained in the negative electrode material layer 11b is used. The negative electrode current collector 11a is preferably made of copper, nickel, stainless steel or aluminum, or an aluminum alloy containing at least one element selected from Mg, Ti, Zn, Mn, Fe, Cu, and Si. The thickness of the negative electrode current collector 11a is preferably from 5 to 20 µm. The current collector having such a thickness can balance the strength and reduction in weight of the negative electrode.

The negative electrode material layer 11b contains a negative electrode active material. The negative electrode active material will be described in detail later.

The negative electrode material layer 11b can further contain a conductive agent and a binder.

The conductive agent plays a peripheral roll of the electrical conductivity between the active materials. Therefore, high electrical conductivity is demanded for the conductive agent. Such a conductive agent is not particularly limited, but at least one carbon material particle selected from the group consisting of graphites such as natural graphites and artificial graphites, carbon blacks such as acetylene black and ketjen black, and vapor-grown carbon fibers such as carbon nanotube and carbon nanofiber is preferable.

The binder plays a role in binding the active material and the conductive agent. The material of the binder is not specifically limited, but polytetrafluoroethylene (PTFE) and polyvinylidene fluoride (PVdF) can be used.

A separator 12 plays a role in preventing electronic contact between the negative electrode 11 and a positive electrode 13 and passing lithium ions. The material of the separator 12 is not particularly limited, but includes a porous film containing polyethylene, polypropylene, cellulose, or polyvinylidene fluoride (PVdF), or a synthetic resin nonwoven fabric. Particularly, a porous film formed of polyethylene or polypropylene melts at a constant temperature and can block electric current, and thus safety can be improved.

A positive electrode 13 contains a positive electrode current collector 13a and a positive electrode material layer 13b formed on both sides of the positive electrode current collector 13a.

The material of the positive electrode current collector 13a is not particularly limited, and includes an aluminum foil or an aluminum alloy foil containing at least one element selected from Mg, Ti, Zn, Ni, Cr, Mn, Fe, Cu, and Si.

The positive electrode material layer 13b contains a positive electrode active material. The positive electrode active material is not particularly limited, but includes oxides, sulfides, and polymers. Examples of the oxides and sulfides include manganese dioxide (MnO₂) capable of occluding lithium, iron oxide, copper oxide, nickel oxide, a lithium manganese composite oxide (e.g., LiₓMn₂O₄ or LiₓMnO₂), a lithium nickel composite oxide (e.g., LiₓNiO₂), a lithium cobalt composite oxide (e.g., LiₓCoO₂), a lithium nickel cobalt composite oxide (e.g., LiNi_{1-y}Co_{y}O₂), a lithium manganese cobalt composite oxide (e.g., LiₓMn_{y}Co₁-_{y}O₂), a lithium-manganese-nickel composite oxide having a spinel structure (e.g., LiₓMn_{2-y}Ni_{y}O₄), a lithium phosphorus oxide having an olivine structure (e.g., LiₓFePO₄, LiₓFe_{1-y}Mn_{y}PO₄, LiₓCoPO₄), iron sulfate [Fe₂(SO₄)₃], a vanadium oxide (e.g., V₂O₅), and a lithium nickel cobalt manganese composite oxide. Herein, x is more than 0 but no more than 1, and y is more than 0 but no more than 1. As the positive electrode active material, these compounds may be used alone or in combination of a plurality of compounds.

Examples of the polymers include conductive polymer materials such as polyaniline and polypyrrole and disulfide polymer materials.

Also, sulfur (S) or carbon fluoride can be used as the active material.

The positive electrode material layer 13b can further contain a conductive agent and a binder. The same materials as the materials of the conductive agent and the binder of the negative electrode material layer 11b can be used as the materials of the conductive agent and the binder of the positive electrode material layer 13b.

In a vicinity of a peripheral edge of the coiled electrode group 9, a negative electrode terminal 4 is connected to the negative electrode current collector 11a of the negative electrode 11 at an outermost layer, and a positive electrode terminal 5 is connected to the positive electrode current collector 13a of the positive electrode 13 at the inside. The negative electrode terminal 4 and the positive electrode terminal 5 are extended outwardly from an opening of the bag-shaped exterior member 3.

The negative electrode terminal 4 is formed, for example, from a material which is electrochemically stable in Li absorption-release potential of the negative electrode active material and has conductivity. Specifically, it is formed of copper, nickel, stainless steel or aluminum, or an aluminum alloy containing elements such as Mg, Ti, Zn, Mn, Fe, Cu, and Si. It is preferable that the negative electrode terminal 4 is formed of a material similar to that of the negative electrode current collector 11a in order to reduce the contact resistance with the negative electrode current collector 11a.

The positive electrode terminal 5 is formed of, for example, a material which has electrical stability and conductivity, with a potential to a lithium ion metal in the range of 3 V or more but 5 V or less, and preferably 3.0 V or more but 4.25 V or less. Specifically, it is formed of aluminum or an aluminum alloy containing elements such as Mg, Ti, Zn, Ni, Cr, Mn, Fe, Cu, and Si. It is preferable that the positive electrode terminal 5 is formed of the same material as that of the positive electrode current collector 13a in order to reduce the contact resistance with the positive electrode current collector 13a.

The bag-shaped exterior member 3 can be formed of a laminate film in which a metal layer is sandwiched between two resin layers. The shape of the bag-shaped exterior member 3 can be appropriately changed according to the shape of the battery. Also, the shape of the battery can be appropriately designed depending on the use of the nonaqueous electrolyte secondary battery 1.

In the bag-shaped exterior member 3, a nonaqueous electrolyte (not shown) is contained. The nonaqueous electrolyte can be, for example, injected from the opening of the bag-shaped exterior member 3. In the nonaqueous electrolyte secondary battery 1, the coiled electrode group 2 and the nonaqueous electrolyte are completely sealed by heat-sealing the opening of the bag-shaped exterior member 3 across the negative electrode terminal 4 and the positive electrode terminal 5.

The nonaqueous electrolyte may be, for example, a liquid nonaqueous electrolyte prepared by dissolving an electrolyte in an organic solvent, or a gel-like nonaqueous electrolyte prepared by forming a composite of a liquid electrolyte and a polymer material.

It is preferred that the electrolyte of the liquid nonaqueous electrolyte be dissolved in an organic solvent at a concentration of 0.5 mol/L or more but 2.5 mol/L or less.

Examples of the electrolyte include lithium perchlorate (LiClO₄), lithium hexafluorophosphate (LiPF₆), lithium tetrafluoroborate (LiBF₄), arsenic lithium hexafluoride (LiAsF₆), lithium trifluoromethasulfonate (LiCF₃SO₃), a lithium salt such as lithium bistrifluoromethylsulfonylimide [LiN(CF₃SO₂)₂], and the mixtures thereof. The electrolyte is preferably one which is not easily oxidized even at a high potential, and LiPF₆ is the most preferable.

Examples of the organic solvent include cyclic carbonates such as propylene carbonate (PC), ethylene carbonate (EC), and vinylene carbonate; linear carbonates such as diethyl carbonate (DEC), dimethyl carbonate (DMC), and methylethyl carbonate (MEC); cyclic ethers such as tetrahydrofuran (THF), 2-methyltetrahydrofuran (2MeTHF), and dioxolane (DOX); linear ethers such as dimethoxyethane (DME) and diethoxyethane (DEE); and γ-butyrolactone (GBL), acetonitrile (AN), and sulfolane (SL). These organic solvents can be used alone or as a mixed solvent.

The polymer material is not particularly limited, and includes polyvinylidene fluoride (PVdF), polyacrylonitrile (PAN), and polyethylene oxide (PEO).

Further, an ordinary temperature molten salt containing lithium ions (ionic melt), polymer solid electrolyte, inorganic solid electrolyte and the like can be also used as the nonaqueous electrolyte.

The ordinary temperature molten salt (ionic melt) means compounds which can exist in a liquid state at normal temperature (15 to 25°C) among organic salts constituted of combinations of organic cations and anions. The ordinary temperature molten salt includes those which solely exist in a liquid state, those which are put into a liquid state when mixed with an electrolyte, and those which are put into a liquid state when dissolved in an organic solvent. Generally, the melting point of the ordinary temperature molten salt to be used for the nonaqueous electrolyte battery is 25°C or less. Further, the organic cation has generally a quaternary ammonium skeleton.

The polymer solid electrolyte is prepared by dissolving an electrolyte in a polymer material and by solidifying the mixture.

The inorganic solid electrolyte is a solid material having lithium ion-conductivity.

Next, the negative electrode active material contained in the negative electrode material layer 11b will be described.

The negative electrode material layer 11b contains a lithium titanium composite oxide having a spinel structure, as a negative electrode active material.

The lithium titanium composite oxide contained in the negative electrode material layer 11b has an average particle size R based on a mass basis of 0.3 µm or more but 0.9 µm or less.

The average particle size R based on a mass basis of the lithium titanium composite oxide is measured according to the following procedure. First, the negative electrode material layer 11b of the negative electrode is slightly scraped off. The scraped material is subjected to heat treatment at a temperature of 150°C over 3 hours, whereby the binder contained in the scraped material is decomposed and removed. The material thus obtained is defined as a measurement sample. This measurement sample is analyzed according to a laser diffraction particle size distribution measurement method, to obtain an average particle size R based on a mass basis. The measurement according to a laser diffraction particle size distribution measurement method can be performed, for example, by using a laser diffraction particle size distribution meter MT-3300EX manufactured by NIKKISO CO., LTD.

In addition, the amount of lithium carbonate contained in the negative electrode material layer 11b is 0.1% by mass or less per mass of the negative electrode active material. Here, the negative electrode material layer 11b preferably contains as little lithium carbonate as possible, and may contain no lithium carbonate, but inevitably contains a trace of lithium carbonate. The amount of lithium carbonate contained in the negative electrode material layer 11b can be measured, for example, by performing a titration on the measurement sample prepared for obtaining an average particle size R based on a mass basis.

When a negative electrode is prepared using such a negative electrode active material, aggregation of the lithium titanium composite oxide does not occur in the slurry preparation stage. A nonaqueous electrolyte secondary battery comprising a negative electrode 11 containing such a negative electrode active material has particles with a short lithium ion diffusion length, thus the charge and discharge characteristics are not reduced even at low temperature.

When the lithium titanium composite oxide has an average particle size R based on a mass basis of less than 0.3 µm, aggregation of the lithium titanium composite oxide occurs in the slurry preparation stage in the negative electrode preparation. In addition, when the lithium titanium composite oxide has an average particle size based on a mass basis of more than 0.9 µm, the lithium ion diffusion length of the particles gets longer.

The amount of lithium carbonate contained in the negative electrode material layer 11b can be controlled, for example, by heat treatment. For example, when a negative electrode material is prepared by using one prepared by heating lithium titanate in an inert atmosphere at a temperature of 300°C to 600°C for 30 minutes to 3 hours, the amount of lithium carbonate contained in the negative electrode material layer 11b can be set to 0.1% by mass or less per mass of the negative electrode active material.

Particles having a particle size distribution of the lithium titanium composite oxide of 1.5 µm or more have a long lithium ion diffusion length. Therefore, when many particles of 1.5 µm or more are contained, the charge and discharge characteristics at low temperature are reduced. Accordingly, the content rate of the particles of the lithium titanium composite oxide of 1.5 µm or more is preferably low. Particularly, it is preferred that the lithium titanium composite oxide show a particle size distribution in which a rate of particles having a particle size of 1.5 µm or more is 20% by mass or less. The particle size distribution of the lithium titanium composite oxide can be measured according to the same procedure as the procedure for measuring the average particle size R based on a mass basis.

In addition, it is desirable that, in the lithium titanium composite oxide contained in the negative electrode material layer 11b, the average particle size R based on a mass basis obtained according to the procedure and lithium salt concentration C in the nonaqueous electrolyte satisfy the relationship that C/R² is 2 or more. The precise reason for such is not known, but the lithium titanium composite oxide contained in the negative electrode material layer 11b has an average particle size R based on a mass basis of 0.3 µm or more but 0.9 µm or less, and the amount of lithium carbonate contained in the negative electrode 11 is 0.1% by mass or less per mass of the negative electrode active material, and a nonaqueous electrolyte secondary battery in which the average particle size R based on a mass basis and the lithium salt concentration C in the nonaqueous electrolyte satisfy the above formula has excellent charge and discharge characteristics at low temperature.

When the water amount contained in the negative electrode 11 is high, reduction to hydrogen gas occurs in the battery, and the battery capacity is reduced. Therefore, the water amount contained in the negative electrode 11 is preferably low, and is preferably 0.05% by mass or less per mass of the negative electrode active material.

The molar ratio of lithium/titanium of the lithium titanium composite oxide is preferably 0.85 to 0.78. When the molar ratio of lithium/titanium of the lithium titanium composite oxide is out of this range, the capacity of the lithium titanium composite oxide is reduced, and the battery capacity is reduced.

As described above, the nonaqueous electrolyte secondary battery according to the first embodiment has a very small particle size, and thus contains a lithium titanium composite oxide having particles of short lithium ion diffusion length as a negative electrode active material. The nonaqueous electrolyte secondary battery according to the first embodiment has particles of short lithium ion diffusion length in the negative electrode active material as described above, thus the charge and discharge characteristics are not reduced even at low temperature. Furthermore, as described above, the lithium titanium composite oxide contained in the nonaqueous electrolyte secondary battery according to the first embodiment does not cause aggregation when preparing the negative electrode 11 and the charge and discharge characteristics are not reduced, even though the particle size is small.

Thus, according to the first embodiment, a nonaqueous electrolyte secondary battery having excellent charge and discharge characteristics at low temperature is provided.

### (Second embodiment)

The battery pack according to a second embodiment comprises the nonaqueous electrolyte secondary battery (unit cell) according to the first embodiment.

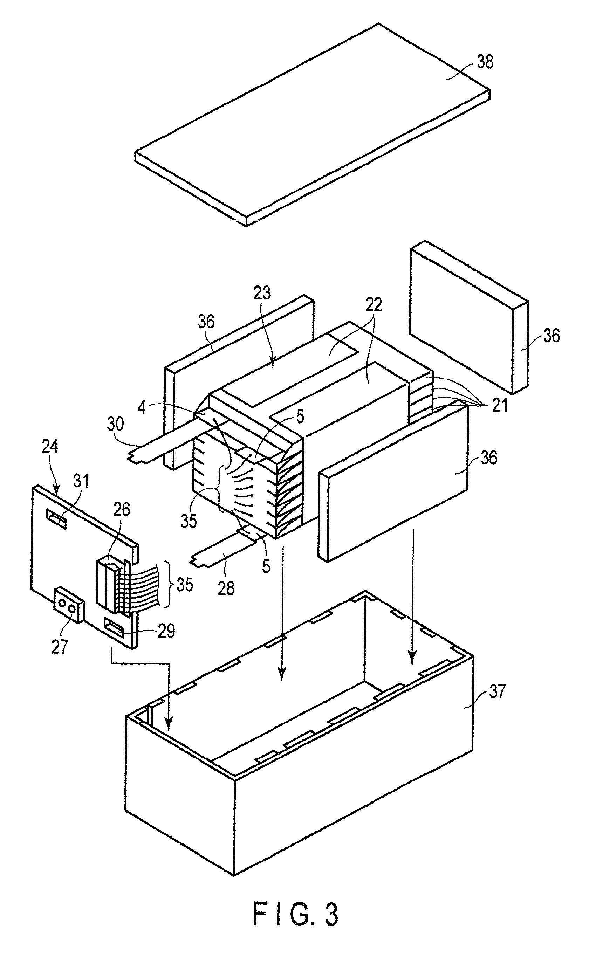

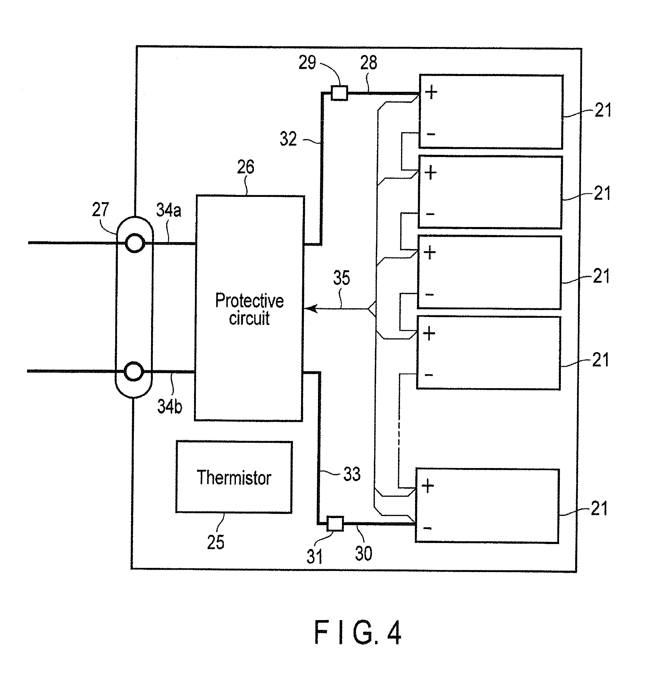

Such a battery pack will be described in detail with reference to FIG. 3 and FIG. 4.

FIG. 3 is an exploded perspective view of a battery pack according to a second embodiment. FIG. 4 is a circuit diagram showing a connection status of the battery pack according to a second embodiment.

A battery pack comprises a plurality of unit cells 21. The unit cell 21 is a nonaqueous electrolyte secondary battery 1 according to the first embodiment 1. A battery module 23 is configured by stacking a plurality of the unit cells 21 so that a negative electrode terminal 4 and a positive electrode terminal 5 extended outside are arranged in the same direction and then fastening them with an adhesive tape 22. The unit cells 21 are electrically connected in series with one another as shown in FIG. 4. Here, the unit cell 21 used in the battery packs shown in FIG. 3 and FIG. 4 has a flat shape, but in the second embodiment, the shape of the unit cell is not particularly limited.

A printed wiring board 24 is arranged opposed to, among the side surfaces of the battery module 23, the side surface where a plurality of the negative electrode terminals 4 and a plurality of the positive electrode terminals 5 are extended. A thermistor 25, a protective circuit 26, and an energizing terminal 27 to an external instrument are mounted on the printed wiring board 24 as shown in FIG. 4. Here, an electric insulating plate (not shown) is attached to the printed wiring board 24 on the surface facing the battery module 23, to avoid unnecessary connection of the wiring of the battery module 23.

A positive electrode-side lead 28 is connected to the positive electrode terminal 5 located at the lowermost layer of the battery module 23 at one terminal, and the other terminal is inserted into a positive electrode-side connector 29 of the printed wiring board 24, thereby electrically connecting the positive electrode terminal 5 located at the lowermost layer of the battery module 23 to the positive electrode-side connector 29 of the printed wiring board 24. A negative electrode-side lead 30 is connected to the negative electrode terminal 4 located at the uppermost layer of the battery module 23 at one terminal, and the other terminal is inserted into a negative electrode-side connector 31 of the printed wiring board 24, thereby electrically connecting the negative electrode terminal 4 located at the uppermost layer of the battery module 23 to the negative electrode-side connector 31 of the printed wiring board 24. The connectors 29 and 31 are connected to the protective circuit 26 through wirings 32 and 33 formed in the printed wiring board 24.

The thermistor 25 detects the temperature of the unit cells 21. The detection signal of the thermistor 25 is sent to the protective circuit 26. The protective circuit 26 can shut down a plus-side wiring 34a and a minus-side wiring 34b between the protective circuit 26 and the energizing terminals 27 to an external instrument under predetermined conditions. For example, the predetermined condition is the case where the detection temperature of the unit cells 21 detected by the thermistor 25 becomes a predetermined temperature or more. Further, the predetermined conditions include, for example, the case where the thermistor 25 detects the overcharge, overdischarge, and over-current of the unit cells 21, and the like. The detection of overcharge and the like may be performed on each of the unit cells 21 or all of the unit cells 21. When each of the unit cells 21 is detected, the cell voltage may be detected, or a positive electrode potential or negative electrode potential may be detected. When detection is performed on all of the unit cells 21, a lithium electrode to be used as a reference electrode is inserted into each of the unit cells 21. In the case of FIGS. 3 and 4, wirings 35 for voltage detection are connected to each of the unit cells 21 and detection signals are sent to the protective circuit 26 through the wirings 35.

In the battery module 23, protective sheets 36 comprised of rubber or resin are each arranged on the side surface parallel to the side surface in which the positive electrode terminal 5 and the negative electrode terminal 4 are extended, and a pair of side surfaces that sandwich the side surface in which the positive electrode terminal 5 and the negative electrode terminal 4 are extended and that are perpendicular to this side surface.

The battery module 23 is housed in a housing container 37 together with each of the protective sheets 36 and the printed wiring board 24. More specifically, in the housing container 37, the protective sheets 36 are each arranged on both internal surfaces in a long side direction and one internal surface in a short side direction, and the printed wiring board 24 is arranged on the other internal surface in a short side direction. The battery module 23 is located in a space surrounded by the protective sheets 36 and the printed wiring board 24. A lid 38 is attached to the upper surface of the housing container 37.

In order to fix the battery module 23, a heat-shrinkable tape may be used in place of the adhesive tape 22. In this case, the battery module is bound by placing the protective sheets on the both sides of the battery module, revolving a heat-shrinkable tube, and thermally shrinking the heat-shrinkable tube.

In FIGS. 3 and 4, the form in which a plurality of the unit cells 21 are connected in series is shown. However, in order to increase the battery capacity, a plurality of the unit cells 21 may be connected in parallel. The assembled battery pack can be also connected in series and/or in parallel.

Also, the form of the battery pack is appropriately changed according to the use. It is preferred for good cycle and current characteristics to be anticipated for use of such battery pack. Specifically, the use of the battery pack for power sources for digital cameras and the use of the battery pack for vehicles such as two- or four-wheel hybrid electric vehicles, two- or four-wheel electric vehicles, and assisted bicycles are listed. Particularly, automobile use is preferred.

The battery pack according to a second embodiment comprises the nonaqueous electrolyte secondary battery according to the first embodiment, as described above. In the nonaqueous electrolyte secondary battery according to the first embodiment, the charge and discharge characteristics are not reduced even at low temperature, as described in the description of the first embodiment. Therefore, the battery pack according to the second embodiment has excellent charge and discharge characteristics at low temperature.

As described above, according to the second embodiment, a battery pack comprising the nonaqueous electrolyte secondary battery having excellent charge and discharge characteristics at low temperature is provided.

### Examples

Hereinbelow, examples will be described.

### (Example 1)

In the present example, a nonaqueous electrolyte secondary battery having the same structure as the nonaqueous electrolyte secondary battery 1 shown in FIGS. 1 and 2 was produced according to the following procedure.

### <Heat Treatment of Negative Electrode Active Material>

Lithium titanate as a negative electrode active material was subjected to heat treatment at 500°C. Lithium carbonate was decomposed according to this treatment, and the amount of lithium carbonate contained in lithium titanate was adjusted.

### <Grinding Treatment of Negative Electrode Active Material>

The heat-treated lithium titanate as a negative electrode active material was subjected to bead mill grinding using N-methylpyrrolidone as solvent to adjust the average particle size of lithium titanate.

### <Preparation of Negative Electrode>

A negative electrode was prepared as described below, using the lithium titanate subjected to bead mill grinding as described above as a negative electrode active material. First, 96% by weight of lithium titanate as a negative electrode active material, 2% by weight of scaly graphite as a conductive agent and 2% by weight of polyvinylidene fluoride as a binder were mixed. N-methylpyrrolidone was added to the mixture thus obtained, to prepare slurry. Next, this slurry was coated on two sides of an aluminum foil with a thickness of 12 µm as a negative electrode current collector 11a to obtain a negative electrode material layer 11b formed on both sides of the negative electrode current collector 11a. Thereafter, the resulting negative electrode material layer 11b was dried and then compressed with a roll press to prepare a negative electrode 11. The prepared negative electrode 11 has a negative electrode material coated portion of 68 mm x 88 mm and an aluminum foil exposed portion for current collection.

### <Measurement of Average Particle Size and Particle Size Distribution of Negative Electrode Active Material>

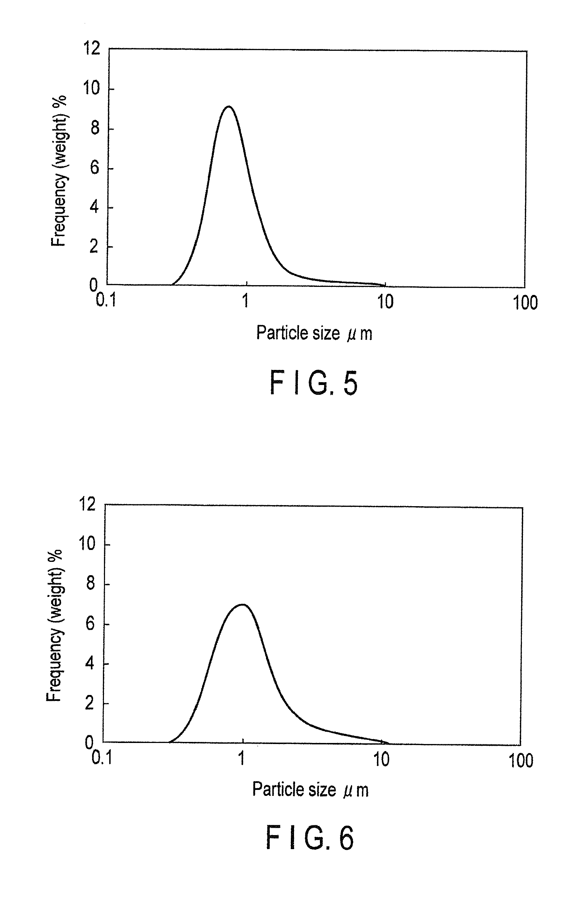

A part of the negative electrode material layer 11b was scraped off from the prepared negative electrode 11, and the scraped substance was subjected to heat treatment at a temperature of 150°C for 3 hours, to decompose the binder. The average particle size and particle size distribution of the sample powder thus obtained were measured using a laser diffraction particle size distribution meter MT-3300EX manufactured by NIKKISO CO., LTD. Dispersion was performed by ultrasound at 40 W for 3 minutes. The average particle size and particle size distribution obtained by this measurement are each shown in Table 1 and FIG. 5.

### <Measurement of Amount of Lithium Carbonate in Negative Electrode>

A part of the negative electrode material layer 11b was scraped off from the prepared negative electrode 11, and the scraped substance was subjected to heat treatment at a temperature of 150°C for 3 hours, to decompose the binder. The amount of lithium carbonate in the sample powder thus obtained was measured by a titration according to the following procedure.

The amount of lithium carbonate contained in the negative electrode 11 was calculated from the result obtained by this measurement. The calculated result is shown in Table 1.

### <Preparation of Positive Electrode>

Mixed were 92% by weight of lithium nickel-cobalt-manganate as a positive electrode active material, 5% by weight of acetylene black as a conductive agent and 3% by weight of polyvinylidene fluoride as a binder. N-methylpyrrolidone was added to the mixture thus obtained, to prepare slurry. This slurry was coated on two sides of an aluminum foil with a thickness of 12 µm as a positive electrode current collector 13a to obtain a positive electrode material layer 11b formed on both sides of the positive electrode current collector 13a. Thereafter, the resulting positive electrode material layer 13b was dried and then compressed with a roll press to prepare a positive electrode 13. The prepared positive electrode 13 has a positive electrode material coated portion of 67 mm x 87 mm and an aluminum foil exposed portion for current collection.

### <Preparation of Electrode Laminate>

Twelve positive plates 13 prepared by the above procedure, thirteen negative plates 11 prepared by the above procedure and a polyolefin-based separator 12 with a thickness of 20 µm were alternately laminated in the order of the negative electrode 11, the separator 12, the positive electrode 13, and the separator 12. Thereafter, aluminum exposed portions of twelve positive electrodes 13 were ultrasonically welded to prepare a positive electrode current collector portion. In addition, aluminum exposed portions of thirteen negative electrodes 11 were ultrasonically welded to prepare a negative electrode current collector portion. The electrode laminate 2 was prepared as described above.

### <Preparation of Battery>

Lithium hexafluorophosphate was dissolved in a solvent containing 30% by volume of propylene carbonate and 70% by volume of diethyl carbonate so as to be 1.5 mol/L. The electrolyte thus obtained was used as a nonaqueous electrolyte.

The periphery of the electrode laminate 9 was covered with aluminum laminate, and the periphery was thermally welded except for one part, to obtain a bag-shaped exterior member 2 housing the electrode laminate 9 and having an opening. From the opening of the bag-shaped exterior member 2, the electrolyte prepared according to the above procedure was injected in an amount that all of the electrode laminate 2 was immersed, and then the opening was closed by thermal sealing. The nonaqueous electrolyte secondary battery 1 was prepared as described above.

### <Measurement of Charge Capacity at Low Temperature>

The prepared battery was charged at 25°C under the conditions of a constant current of 0.2 A, a constant voltage of 2.7 V and a charging time of 10 hours, and then discharged at 25°C under the conditions of a constant current of 0.2 A and 1.5 V cut off. The 1 C current value was obtained from the resulting discharge capacity. Next, a charge-discharge cycle of charging at a constant current of 1 C, a constant voltage of 2.7 C and a 1/20 C cut off at 25°C, and discharging at a constant current of 1 C and 1.5 V cut off at 25°C, was performed for two cycles, and the charge capacity at the second cycle was defined as the 1 C charge capacity at 25°C. This capacity was defined as capacity C₁. Next, the battery was cooled to -20°C and left for 3 hours, then charged at a constant current of 1 C, a constant voltage of 2.7 V, and 1/20 C cut off, and the resulting charge capacity was defined as 1 C charge capacity at -20°C. This capacity was defined as capacity C₂.

From these results, a 1 C charge capacity retention ratio at -20°C was obtained by the following formula: C = C₂/C₁. Here, C is the 1 C charge capacity retention ratio at -20°C. The result is shown in Table 1.

### (Example 2)

In Example 2, a nonaqueous electrolyte secondary battery was prepared in the same manner as in Example 1, except for prolonging the grinding treatment of the negative electrode active material to adjust the average particle size.

Here, the average particle size of the negative electrode active material and the amount of lithium carbonate contained in the negative electrode 11 were measured in the same manner as in Example 1. The measurement result is shown in Table 1.

Furthermore, for the prepared nonaqueous electrolyte secondary battery, the charge capacity at low temperature was measured in the same manner as in Example 1. The measurement result is shown in Table 1.

### (Comparative Example 1)

In Comparative Example 1, a nonaqueous electrolyte secondary battery was prepared in the same manner as in Example 1, except that the heat treatment of the negative electrode active material and the grinding treatment of the negative electrode active material were not carried out.

Here, the average particle size and the particle size distribution of the negative electrode active material were measured in the same manner as in Example 1. The results obtained by this measurement are each shown in Table 1 and FIG. 6. In addition, for the prepared negative electrode, the amount of lithium carbonate contained in the negative electrode was measured. The measurement result is shown in Table 1.

Furthermore, for the prepared nonaqueous electrolyte secondary battery, the charge capacity at low temperature was measured in the same manner as in Example 1. The measurement result is shown in Table 1.

### (Comparative Example 2)

In Comparative Example 2, a nonaqueous electrolyte secondary battery was prepared in the same manner as in Example 1, except that the grinding treatment of the negative electrode active material was not carried out.

Here, the average particle size of the negative electrode active material and the amount of lithium carbonate contained in the negative electrode 11 were measured in the same manner as in Example 1. The measurement result is shown in Table 1.

Furthermore, for the prepared nonaqueous electrolyte secondary battery, the charge capacity at low temperature was measured in the same manner as in Example 1. The measurement result is shown in Table 1.

### (Comparative Example 3)

In the present example, a nonaqueous electrolyte secondary battery was prepared in the same manner as in Example 1, except that the heat treatment of the negative electrode active material was not carried out.

Here, the average particle size of the negative electrode active material and the amount of lithium carbonate contained in the negative electrode 11 were measured in the same manner as in Example 1. The measurement result is shown in Table 1.

Furthermore, for the prepared nonaqueous electrolyte secondary battery, the charge capacity at low temperature was measured in the same manner as in Example 1. The measurement result is shown in Table 1.

**Table 1**

| | Average Particle size R based on a Mass Basis (µm) | Rate of Particles having Particle Size of 1.5 µm or more (% by Mass) | Content rate of Lithium carbonate (% by Mass) | Concentra tion of Lithium salt C (mol/L) | 1 C charge capacity retention ratio at -20°C (%) | C/R² (mol/mm⁵) |
|---|---|---|---|---|---|---|
| Example 1 | 0.8 | 12% | 0.05 | 1.5 | 82% | 2.3 |
| Example 2 | 0.6 | 15% | 0.06 | 1.5 | 83% | 4.2 |
| Comparative Example 1 | 1.0 | 27% | 0.20 | 1.5 | 62% | 1.5 |
| Comparative Example 2 | 1.0 | 30% | 0.04 | 1.5 | 60% | 1.5 |
| Comparative Example 3 | 0.7 | 25% | 0.20 | 1.5 | 68% | 3.1 |

It can be seen from Table 1 that the nonaqueous electrolyte secondary batteries of Examples 1 and 2 containing lithium titanate having an average particle size R based on a mass basis of 0.3 µm or more but 0.9 µm or less as a negative electrode active material and comprising a negative electrode in which the content rate of lithium carbonate is 0.1% by mass or less per mass of lithium titanate has a high 1 C charge capacity retention ratio at -20°C, as compared to the nonaqueous electrolyte secondary batteries of Comparative Examples 1 to 3.

The nonaqueous electrolyte secondary battery of Comparative Example 1 is inferior in charge and discharge characteristics at low temperature, since lithium titanate has an average particle size R based on a mass basis of 1.0 µm, and the content rate of lithium carbonate is 0.20% by mass per mass of lithium titanate.

The nonaqueous electrolyte secondary battery of Comparative Example 2 is inferior in charge and discharge characteristics at low temperature, since lithium titanate has an average particle size based on a mass basis of 1.0 µm, while the content rate of lithium carbonate is 0.04% by mass per mass of lithium titanate.

The nonaqueous electrolyte secondary battery of Comparative Example 3 is inferior in charge and discharge characteristics at low temperature, since the content rate of lithium carbonate is 0.20% by mass per mass of lithium titanate, while lithium titanate has an average particle size R based on a mass basis of 0.7 µm.

As described above, the nonaqueous electrolyte secondary batteries of Examples 1 and 2 have excellent charge and discharge characteristics at low temperature, as compared to the nonaqueous electrolyte secondary batteries of Comparative Examples 1 to 3.

Hereinbelow, bead mill grinding in Example 1, Example 2 and Comparative Example 3 described above will be each described in detail.

In Example 1 and Example 2 described above, for the grinding treatment of the negative electrode active material, a horizontal type bead mill grinder with a container volume of 2 L, filled with alumina beads with a bead size of 1 mm was used. In the grinding treatment, the atmosphere inside the bead mill grinder was replaced with an inert gas atmosphere, so as not to produce lithium carbonate on the surface of the negative electrode active material. In addition, while the grinding time was 2 hours in Example 1, the grinding time was prolonged to 6 hours in Example 2.

In Comparative Example 3 described above, for the grinding treatment of the negative electrode active material, a horizontal type bead mill grinder with a container volume of 2 L, filled with alumina beads with a bead size of 1 mm was used. In the grinding treatment, the atmosphere inside the bead mill grinder was replaced with an inert gas atmosphere. However, in Comparative Example 3, since the heat treatment of the negative electrode active material before the grinding treatment was not carried out, the content rate of lithium carbonate in the negative electrode was higher than those in Example 1 and Example 2, as shown in Table 1.

### (Example 3)

In the present example, a nonaqueous electrolyte secondary battery was prepared in the same manner as in Example 1, except that the grinding treatment of the negative electrode active material was carried out using a dry jet mill grinder without using a solvent.

For the nonaqueous electrolyte battery of Example 3, the average particle size of the negative electrode active material, the amount of lithium carbonate contained in the negative electrode 11 and the charge capacity at low temperature were measured in the same manner as in Example 1. The measurement result is shown in Table 2.

**Table 2**

| | Average particle size R based on a Mass basis (µm) | Content rate of Particles of Lithium titanium composite oxide of 1. 5 µm or more (% by Mass) | Content rate of Lithium carbonate (% by Mass) | Concentration of Lithium salt C (mol/L) | 1 C charge capacity retention ratio at - 20°C (%) | C/R² (mol/mm⁵) |
|---|---|---|---|---|---|---|
| Example 3 | 0.7 | 16% | 0.05 | 1.5 | 82% | 3.1 |

It can be seen from the comparison of the results shown in Table 2 with the results shown in Table 1 that the nonaqueous electrolyte secondary battery of Example 3 containing lithium titanate having an average particle size R based on a mass basis of 0.3 µm or more but 0.9 µm or less as a negative electrode active material and comprising a negative electrode in which the content rate of lithium carbonate is 0.1% by mass or less per mass of lithium titanate has a high 1 C charge capacity retention ratio at -20°C, as compared to the nonaqueous electrolyte secondary batteries of Comparative Examples 1 to 3. More specifically, it can be seen that the nonaqueous electrolyte secondary battery of Example 3 is different from Example 1 and Example 2 in that the grinding condition is dry, but is the same as the nonaqueous electrolyte secondary batteries of Examples 1 and 2 in that the charge capacity retention ratio at low temperature was more excellent than that of the nonaqueous electrolyte secondary batteries of Comparative Examples 1 to 3.

The water content in the negative electrode 11 of the nonaqueous electrolyte secondary batteries of Examples 1 to 3 and Comparative Examples 1 to 3 was determined. The Karl Fischer method was used for water amount determination. The measurement result is shown in Table 3.

**Table 3**

| | Water Content (% by Weight) |
|---|---|
| Example 1 | 0.02 |
| Example 2 | 0.02 |
| Example 3 | 0.02 |
| Comparative Example 1 | 0.02 |
| Comparative Example 2 | 0.02 |
| Comparative Example 3 | 0.02 |

It can be seen from the result in Table 3 that the nonaqueous electrolyte secondary batteries of Examples 1 to 3 and Comparative Examples 1 to 3 have the same water amount in the negative electrode 11. More specifically, it can be seen that the nonaqueous electrolyte secondary batteries of Examples 1 to 3 and Comparative Examples 1 to 3 all have the same water amount in the negative electrode 11, but the nonaqueous electrolyte secondary batteries of Examples 1 to 3 containing lithium titanate having an average particle size R based on a mass basis of 0.3 µm or more but 0.9 µm or less as a negative electrode active material and comprising a negative electrode in which the content rate of lithium carbonate is 0.1% by mass or less per mass of lithium titanate has a high 1 C charge capacity retention ratio at -20°C, as compared to the nonaqueous electrolyte secondary batteries of Comparative Examples 1 to 3.

It can be seen from this result that the nonaqueous electrolyte secondary batteries of Examples 1 to 3 contain lithium titanate having an average particle size R based on a mass basis of 0.3 µm or more but 0.9 µm or less as a negative electrode active material and comprise a negative electrode in which the content rate of lithium carbonate is 0.1% by mass or less per mass of lithium titanate, whereby excellent charge and discharge characteristics at low temperature can be shown even without strictly controlling the water content.

The amount of lithium carbonate in the negative electrode can be measured by performing a general procedure for titration. For example, Warder's method using an indicator such as phenolphthalein and methyl orange can be used.

An average particle size and a particle size distribution of a negative electrode active material contained in a negative electrode of the nonaqueous electrolyte secondary battery and the amount of lithium carbonate in the negative electrode can be measured, for example, according to the following procedure.

First, a nonaqueous electrolyte secondary battery is disassembled, and a negative electrode is taken out. Next, a part of the negative electrode active material layer is scraped off from the negative electrode taken out. Subsequently, the scraped negative electrode active material layer is heat-treated. The heat treatment is carried out, for example, at 150°C for 3 hours. By this heat treatment, a binder and a conductive agent are removed from the negative electrode active material layer, and the negative electrode active material remains. This negative electrode active material was measured according to the same procedure as the previously described method, whereby the average particle size and the particle size distribution of the negative electrode active material contained in the negative electrode of the nonaqueous electrolyte secondary battery and the amount of lithium carbonate in the negative electrode can be measured.

The average particle size R based on a mass basis of the lithium titanium composite oxide can be obtained, for example, from the particle size distribution of the lithium titanium composite oxide that represents the abundance ratio in % by mass.

The lithium carbonate content of the negative electrode in the nonaqueous electrolyte secondary battery can be also adjusted, for example, by battery degassing.

Some embodiments of the present invention have been described, but these embodiments have been presented by way of example, and are not intended to limit the scope of the invention. These novel embodiments can be carried out in various other forms, and various omissions, substitutions, and changes can be made therein without departing from the spirit of the invention. These embodiments and their modifications are included in the scope and spirit of the invention, and are included in the inventions described in the scope of the claims and their equivalent scopes.

### REFERENCE SIGNS LIST

1: Nonaqueous electrolyte secondary battery; 2: Coiled electrode group; 3: Bag-shaped exterior member; 4: Negative electrode terminal; 5: Positive electrode terminal; 11: Negative electrode; 11a: Negative electrode current collector; 11b: Negative electrode material; 12: Separator; 13: Positive electrode; 13a: Positive electrode current collector; 13b: Positive electrode material layer; 21: Unit cell; 23: Battery module; 24: Printed wiring board, 25: Thermistor; 26: Protective circuit; 37: Housing container; 38: Lid.

## Claims

1. A nonaqueous electrolyte secondary battery, comprising:
a positive electrode;
a negative electrode comprising a lithium titanium composite oxide having a spinel structure as a negative electrode active material; and
a nonaqueous electrolyte,
wherein the lithium titanium composite oxide has an average particle size based on a mass basis of 0.3 µm or more but 0.9 µm or less, and a lithium carbonate content rate of the negative electrode is 0.1% by mass or less per mass of the negative electrode active material.

2. The nonaqueous electrolyte secondary battery according to claim 1, wherein the lithium titanium composite oxide has a particle size distribution in which a rate of particles having a particle size of 1.5 µm or more is 20% by mass or less.

3. The nonaqueous electrolyte secondary battery according to claim 1, wherein the nonaqueous electrolyte contains a lithium salt, and a value of C/R² is 2 [mol/mm⁵] or more, provided that the average particle size of the lithium titanium composite oxide based on a mass basis is R [mm] and a concentration of the lithium salt is C [mol/mm³].

4. The nonaqueous electrolyte secondary battery according to claim 1, wherein a water content rate of the negative electrode is 0.05% by mass or less per mass of the negative electrode active material.

5. The nonaqueous electrolyte secondary battery according to claim 1, wherein the lithium titanium composite oxide has a molar ratio of lithium/titanium of 0.85 to 0.78.

6. A battery pack comprising the nonaqueous electrolyte secondary battery according to any one of claims 1 to 5.
